# EUROPÄISCHE PATENTSCHRIFT

(11) **EP 3 592 615 B1**
(45) Veröffentlichungstag und Bekanntmachung des Hinweises auf die Patenterteilung: **21.10.2020**
(21) Anmeldenummer: 18710828.7
(22) Anmeldetag: 08.03.2018
(51) Int. Cl.: B60S 3/04

(54) **SELBSTPOSITIONIERENDES WASCHPORTAL**
SELF-POSITIONING WASHING GANTRY
PORTIQUE DE LAVAGE À POSITIONNEMENT AUTOMATIQUE

(30) Priorität: 09.03.2017 DE 102017105061
(43) Veröffentlichungstag der Anmeldung: 15.01.2020
(73) Patentinhaber: WashTec Holding GmbH, 86153 Augsburg (DE)
(72) Erfinder: ENDRESS, Florian, 86497 Horgau (DE); KÖLBL, Ulrich, 86316 Friedberg (DE); SCHWÄRZER, Michael, 86447 Aindling (DE); CONRAD, Ferdinand, 86159 Augsburg (DE); WÖLFLE, Stefan, 86150 Augsburg (DE)
(74) Vertreter: Winter, Brandl, Fürniss, Hübner, Röss, Kaiser, Polte - Partnerschaft mbB
(86) Internationale Anmeldenummer: PCT/EP2018/055810
(87) Internationale Veröffentlichungsnummer: WO 2018/162662

(56) Entgegenhaltungen:
- DE-B3-102014 112 052
- DE-U1- 29 908 866
- US-B1- 9 114 440

## Beschreibung

Die Erfindung betrifft eine Portalwaschanlage gemäß dem Oberbegriff des Anspruchs 1.

In der Praxis sind bislang Portalwaschanlagen bekannt, bei denen der Fahrzeugführer das zu waschende Fahrzeug in eine Waschposition fährt. In dieser wird ein mit diversen Reinigungs- und Behandlungseinrichtungen ausgestattetes Portal der Waschanlage, über Schienen am Boden und/oder der Decke geführt, während des Waschvorgangs in Fahrzeuglängsrichtung relativ zum Fahrzeug verfahren. Ein solches Schienensystem für ein Waschportal ist teuer und aufgrund der ortsfesten Installation unflexibel. Zudem verursachen am Boden verlaufende Schienen eine nicht zu vernachlässigende Unfallgefahr für sich durch die Anlage bewegende Kundschaft oder Wartungspersonal.

Die Fahrzeugpositionierung im bzw. unter dem Portal ist bei solchen bekannten Systemen vom Fahrzeugführer abhängig. Einige Fahrzeugführer-Innen trauen es sich nicht zu in die meist engen (Wasch-)Anlagen einzufahren und das Fahrzeug korrekt darin zu positionieren. Zudem ist ein Nachteil solcher Portalwaschanlagen, dass ein nicht optimal (also außermittig oder schief) abgestelltes Fahrzeug sich negativ auf das Waschergebnis auswirkt, insbesondere im Bereich der Felgen. Die bekannten Systeme sind folglich anfällig für menschliche Fehler, die in einer Beschädigung des Fahrzeugs durch das Portal (Seitenspiegel) oder ein Zerkratzen der Felgen durch die Schienen resultieren können.

Zumindest das letztgenannte Problem wird bislang entfernt durch die sogenannten Radleitschienen in Portalwaschanlagen adressiert, wie sie bspw. aus der DE 10 2014 112 052 B3 bekannt sind. Auch das Gebrauchsmuster DE 299 08 866 U1 beschäftigt sich mit diesem Problem und schlägt eine Portalwaschanlage vor, die mit mehreren Kameras zum Erfassen eines einfahrenden Fahrzeugs ausgestattet ist. Anhand der erfassten Kameradaten werden Anweisungen auf einem Bildschirm ausgegeben, die den Fahrer dabei unterstützen sollen, das Fahrzeug optimal unter dem Portal zu positionieren.

Trotz dieser dem Stand der Technik bekannten Leit- und Hilfsvorrichtungen kann ein menschlicher Fehler beim Einfahren nicht komplett ausgeschlossen werden. Zudem gibt es Menschen, die, z.B. aus Platzangst, mangelnder Fahrerfahrung, hohem Alter oder ähnlichen Gründen, trotz solcher Systeme nicht gerne in eine Portalwaschanlage einfahren möchten.

Daher ist es ein lange bestehendes Bedürfnis im Gebiet der Portalwaschanlagen ein System bereitzustellen, das das Einfahren und Positionieren eines Fahrzeugs in einer Waschanlage obsolet werden lässt.

Ein bevorzugtes Ziel der vorliegenden Erfindung ist es die Positionierung des Fahrzeugs in der Waschanlage erheblich zu vereinfachen.

Weiterhin stellt es ein bevorzugtes Ziel der vorliegenden Erfindung dar, eine Portalwaschanlage bereitzustellen, die sich im Vergleich zu herkömmlichen Anlagen schnell auf- und abbauen bzw. umpositionieren lässt.

Die oben genannten Ziele und Aufgaben werden erfindungsgemäß durch eine Portalwaschanlage mit den Merkmalen des Anspruchs 1 bzw. durch ein Verfahren gemäß dem nebengeordneten Anspruch gelöst. Vorteilhafte Weiterbildungen sind Gegenstand der jeweiligen Unteransprüche.

Gemäß einem ersten Aspekt der Erfindung weist eine erfindungsgemäße Portalwaschanlage ein relativ zu einem Fahrzeug verfahrbares Portal, an welchem Reinigungseinrichtungen zum Reinigen eines Fahrzeugs angeordnet sind, eine Steuereinrichtung zum Steuern einer Bewegung des Portals und mindestens eine Erfassungseinrichtung zum Erfassen einer Position des Fahrzeugs auf. Die Erfassungseinrichtung kann neben der Position des Fahrzeugs ferner auch eine Ausrichtung des Fahrzeugs erfassen. Erfindungsgemäß ist das Portal so ausgebildet, dass es relativ zum Fahrzeug frei verfahr- und ausrichtbar ist.

Die Steuereinheit ist zudem dazu ausgebildet, das Portal relativ zu der erfassten Fahrzeugposition und -ausrichtung vorbestimmt zu positionieren und, falls erforderlich, auszurichten und zu verfahren. In anderen Worten kehrt die Erfindung das bisherige Positionierungsprinzip der Portalwaschanlagen um, sodass nicht das Fahrzeug im Portal positioniert werden muss, sondern sich das Portal bezüglich des Fahrzeugs positioniert.

Hierzu ist es nötig, dass das Portal gegenüber dem abgestellten Fahrzeug frei verfahrbar ist. Vorzugsweise kann das Portal dazu in seiner Verfahrbarkeit zumindest zwei, im Wesentlichen horizontale, translatorische Freiheitsgrade und zumindest einen, im Wesentlichen vertikalen, rotatorischen Freiheitsgrad aufweisen. Besonders vorteilhaft ist es, wenn das gesamte Portal mit den oben genannten Freiheitsgraden verfahrbar ist und nicht nur Teile oder Unterbaugruppen von diesem. In anderen Worten kann das erfindungsgemäße Portal vorzugsweise flurgebunden flächenbeweglich sein, d.h. sich in der Art gleisloser Flurförderzeuge fortbewegen. Noch einmal anders ausgedrückt kann das Portal in Längs-, Quer- und beliebige dazwischenliegende Richtungen verfahrbar sein sowie eine Rotation um die eigene Hochachse ermöglichen. Aufbauend auf diesem Aspekt der Erfindung kann das Portal dazu ausgebildet sein, autark von Schienen oder anderen Leitsystemen frei verfahrbar zu sein. Dies hat neben dem Vorteil der freien Beweglichkeit auch den Vorteil, das Unfallrisiko im Bereich der Anlage zu senken und einen einfacheren Auf- und Abbau der Portalwaschanlage zu ermöglichen.

Gemäß einer weiteren bevorzugten Ausführungsform kann das Portal einen omnidirektionalen Antrieb aufweisen, z.B. in Form von Allseitenrädern oder Fahr-Dreh-Modulen, mit dessen Hilfe es relativ zum Fahrzeug frei verfahrbar ist. Derartige omnidirektionalen Antriebe bieten den Vorteil einer guten Manövrierbarkeit, da ein damit ausgestattetes Portal jederzeit in eine beliebige Richtung fahren kann. Dies hilft dabei das Portal auf kleinstem Raum optimal bezüglich des Fahrzeugs positionieren und ausrichten zu können.

Besonders bevorzugt kann der oben beschriebene omnidirektionale Antrieb durch sogenannte Mecanum-Rollen, auch Ilon-Räder oder Omniwheels genannt, ausgebildet sein. Diese haben gegenüber anderen omnidirektionalen Antrieben den Vorteil, einen besonders ruhigen Lauf zu haben und für hohe Lasten geeignet zu sein.

Gemäß einem alternativen Aspekt kann das Portal mittels einer Gelenkarm- oder Portalroboterkinematik frei verfahrbar sein. Bei einer solchen Ausführungsform könnte das (Wasch-)Portal also an einem Roboterportal oder -manipulator aufgehängt sein. Dies hat den Vorteil, dass kein Flurkontakt bzw. keine Bodenanbindung des Portals nötig ist und eignet sich insbesondere für unebene Untergründe. Anders ausgedrückt kann die Portalwaschanlage in der Art flurfreier Fördermittel ausgeführt sein. Eine solche Ausführungsform bietet ebenfalls die Vorteile einer guten Manövrierbarkeit des Portals auf kleinstem Raum. Zudem erlaubt es eine solche Ausführungsform auch das Portal von oben auf ein Fahrzeug herabzusenken.

Gemäß einer weiteren bevorzugten Ausführungsform kann die Portalwaschanlage einen markierten Abstellbereich aufweisen. Vorzugsweise kann die Erfassungseinrichtung dazu ausgebildet sein, den markierten Abstellbereich zu erkennen. Alternativ kann das Portal dazu ausgebildet sein, über interne Sensorik, bspw. interne Drehgeber bzw. Encoder, seine Position relativ zum markierten Abstellbereich zu erfassen, insbesondere unter Verwendung einer Referenzposition.

Gemäß einem weiteren Aspekt der Erfindung kann die zumindest eine Erfassungseinrichtung und/oder die Steuereinrichtung im oder am Portal angeordnet sein. Auf diese Weise kann das Portal weitgehend autark agieren und ist nicht durch eine ortsfeste Steuerung oder Erfassungseinrichtung in seinem Wirkradius eingeschränkt.

Nach einer weiteren bevorzugten Ausführungsform kann die Erfassungseinrichtung berührungslose Sensoren, insbesondere optische bzw. lichtempfindliche und/oder akustische und/oder strahlungsempfindliche Sensoren einzeln oder in Kombination aufweisen.

Vorzugsweise kann die Erfassungseinrichtung zumindest eine Kamera aufweisen. Dabei können z.B. niedrigauflösende Kameras verwendet werden, welche sich hauptsächlich an den eingeschalteten Scheinwerfern eines Fahrzeugs orientieren, oder vorzugsweise hochauflösende Kameras verwendet werden, die auch eine Konturenerkennung ermöglichen.

Eine eingesetzte akustische Erfassungseinrichtung kann vorzugsweise als Ultraschallerfassungseinrichtung mit einem Ultraschallsender und einem entsprechenden Signalempfänger ausgebildet sein.

Als Strahlen-Erfassungseinrichtung können vorzugsweise Radaranlagen mit zumindest einem Sender und zumindest einem Empfänger für elektromagnetische Strahlung, eingesetzt werden. Eine solche auf Radarstrahlung basierende Erfassung hat den Vorteil weniger durch die in einer Waschanlage herrschenden Umwelteinflüsse wie bspw. Wasserdampf und Lärm beeinträchtigt zu werden als andere Erfassungseinrichtungsvarianten.

Die eingesetzte Erfassungseinrichtung kann vorzugsweise besonders betriebssicher sein und auch unter den in einer Fahrzeugwaschanlage herrschenden Umgebungsbedingungen zuverlässig und genau arbeiten

Gemäß einem weiteren Ausführungsbeispiel kann die Erfassungseinrichtung dazu ausgebildet sein, die Kontur zumindest einer Fahrzeugoberfläche zu erfassen und die Steuereinrichtung dazu ausgebildet sein, aus der erfassten Kontur eine Ausrichtung, ggf. auch eine Längs- und/oder Quermittelachse, des Fahrzeugs zu berechnen. In anderen Worten kann anhand erkannter Symmetrien in der durch die Erfassungseinrichtung erfassten Fahrzeugkontur die Fahrzeugausrichtung berechnet werden. Auf diese Weise ist eine individuelle Anpassung der Portalausrichtung an unterschiedliche Fahrzeugtypen möglich. Vorzugsweise kann das Portal auch während des Waschvorgangs, insbesondere mittig, entlang der erfassten Längs- und/oder Mittelachse des Fahrzeugs verfahren. Alternativ können bspw. auch die Scheinwerfer des Fahrzeugs dazu verwendet werden, dessen Ausrichtung und ggf. Längsmittelachse zu bestimmen.

Gemäß einem weiteren Aspekt kann durch die Steuereinrichtung aus der erfassten Fahrzeugkontur auch ein Höhenprofil zum gezielten Steuern der Reinigungseinrichtungen, insbesondere einer horizontalen Waschbürste, errechnet werden. Ebenso kann durch die Steuereinrichtung ein Breitenprofil zum gezielten Steuern der vertikalen Waschbürsten und/oder der Radwaschbürsten errechnet werden.

Gemäß einem weiteren Aspekt weist ein erfindungsgemäßes Verfahren zum Reinigen eines Fahrzeugs mittels einer Portalwaschanlage, die folgenden Schritte auf:
- Abstellen eines Fahrzeugs auf einer vorbestimmten, insbesondere markierten, Fläche;
- Erfassen einer Position und einer Ausrichtung des abgestellten Fahrzeugs;
- Ausrichten eines frei beweglichen Portals anhand der erfassten Fahrzeugposition und Positionieren des Portals an eine vorbestimmte Position relativ zum Fahrzeug; und
- Reinigen des Fahrzeugs mittels an dem Portal angeordneten Reinigungsvorrichtungen.

Weitere Besonderheiten und Vorzüge ergeben sich aus der folgenden Beschreibung von bevorzugten Ausführungsbeispielen anhand der Zeichnungen. Es zeigen:
Fig. 1 eine schematische Ansicht eines Waschportals gemäß einer bevorzugten Ausführungsform sowie eine Darstellung eines Verfahr- und Positioniervorgangs bezüglich eines abgestellten Fahrzeugs;
Fig. 2 eine weitere schematische Ansicht des Waschportals gemäß der ersten Ausführungsform sowie eine Darstellung eines Verfahr- und Positioniervorgangs bei einem schräg abgestellten Fahrzeug;
Fig. 3 eine beispielhafte Darstellung eines Mecanum-Rades;
Fig. 4 eine Darstellung des Funktionsprinzips von Mecanum-Rädern; und
Fig. 5 eine Prinzipskizze der Steuerung eines Portals gemäß der ersten Ausführungsform.

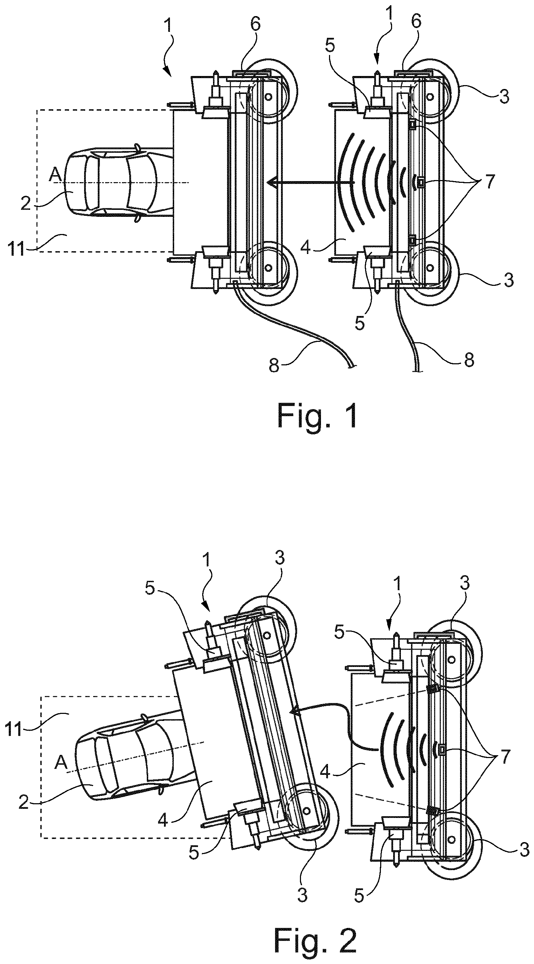

In Fig. 1 ist eine erfindungsgemäße Portalwaschanlage gemäß einem bevorzugten Ausführungsbeispiel schematisch dargestellt. Die Portalwaschanlage weist ein Waschportal 1 mit diversen Reinigungseinrichtungen 3, 4, 5 auf (fortan Portal 1 genannt). Das Portal 1 wiederum weist zwei vertikale Portalsäulen und, an deren oberen Enden angeordnet, eine quer dazu verlaufende Traverse auf. An der Traverse sind um senkrechte Achsen drehbare Waschbürsten 3 angeordnet, die zum Waschen der Seitenflächen und der Vorder- und Rückseite eines Fahrzeugs 2 an der Traverse entlang deren Längsrichtung bewegbar sind. Eine horizontal über dem Fahrzeugdach angeordnete Waschbürste 4 ist entlang der Säulen vertikal verfahrbar angeordnet. Zudem weist das dargestellte Portal 1 an einem unteren Abschnitt der Innenseiten der Säulen angeordnete Radwaschbürsten 5 zum Reinigen und Behandeln der Fahrzeugräder- und felgen auf. Zudem weist das Portal 1 Einrichtungen zur Applikation von Wasser und Behandlungsmitteln sowie zum Trocknen des Fahrzeugs 2 auf, die jedoch nicht weiter dargestellt sind.

Darüber hinaus weist das Portal 1 eine Steuereinrichtung 6 zum Steuern seiner Bewegungen sowie eine Erfassungseinrichtung 7 zum Erfassen eines zu waschenden Fahrzeugs 2 auf.

Die bislang dem Stand der Technik bekannten Waschportale lassen sich entlang von Schienen in Längsrichtung eines Fahrzeugs 2 verfahren, um mit Hilfe der oben genannten Reinigungseinrichtungen 3, 4, 5 das Fahrzeug 2 zu reinigen. Dazu ist es nötig, dass das Fahrzeug 2 relativ zu den Schienen mittig und parallel positioniert wird, da die herkömmlichen Waschportale durch die Schienenführung in ihrer Bewegungsfreiheit stark eingeschränkt sind. Genauer gesagt besitzen sie nur einen einzigen translatorischen Freiheitsgrad entlang der Längsrichtung der Schienen.

Das erfindungsgemäße Portal 1 kann sich im Gegensatz zu herkömmlichen Waschportalen, autark von jeglichen Schienen- oder Leitsystemen, relativ zu dem zu reinigenden Fahrzeug 2 frei positionieren und bewegen. Auf diese Weise kann sich das erfindungsgemäße Portal 1, wie in Fig. 2 dargestellt, auch dann, wenn ein Fahrzeug 2 schräg und außermittig zum Portal 1 abgestellt wurde, optimal zu und über diesem positionieren.

Die freie Beweglichkeit ist bei dem Portal 1 des gezeigten Ausführungsbeispiels durch einen omnidirektionalen Antrieb umgesetzt, welcher in diesem Fall an den Säulen des Portals 1 angeordnet ist. Es sind genauso auch andere Antriebe bspw. konventionelle, bei gleislosen Flurfördermitteln übliche Radaufhängungen oder Kettenantriebe denkbar, jedoch haben omnidirektionale Antriebe den Vorteil einer besonders guten Manövrierbarkeit auf engstem Raum.

Beispiele für omnidirektionale Antriebe sind sogenannte Allseitenräder und Fahr-Dreh-Module. Allseitenräder zeichnen sich insbesondere dadurch aus, dass auf der Umlauffläche eines jeden Hauptrades weitere, zumeist walzen- oder tonnenförmige, Hilfsräder angebracht sind, deren Drehachsen orthogonal zur Drehachse des Hauptrades ausgerichtet sind. Ein weiteres Beispiel für omnidirektionale Antriebe sind die sogenannten Fahr-Dreh-Module, wie sie z.B. auch bei Mondsonden zum Einsatz kommen. Ein Fahr-Dreh-Modul ist im Prinzip ein klassisches Antriebsrad, das zusätzlich aktiv um seine Hochachse gedreht werden kann.

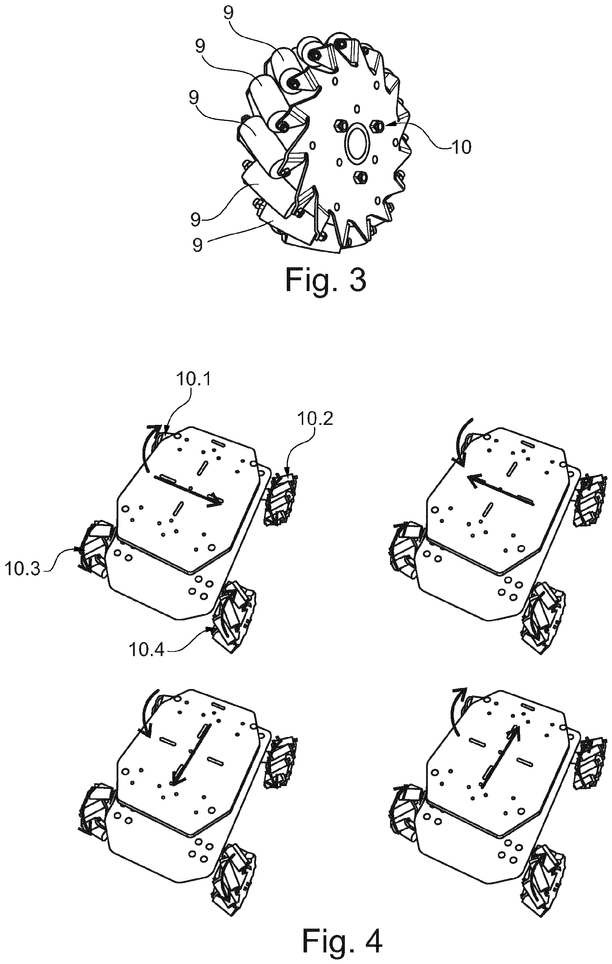

Bei dem dargestellten bevorzugten Ausführungsbeispiel ist der omnidirektionale Antrieb durch sogenannte Mecanum- oder Ilon-Räder 10 ausgebildet. Mecanum Räder 10 zeichnen sich insbesondere dadurch aus, dass entlang der Umlauffläche ballige Walzen (Hilfsräder) 9 unter einem 45° Winkel zur Drehachse angeordnet sind (vgl. Fig. 3). Durch die Schrägstellung der Hilfsräder 9 wird im Vergleich zu Allseitenrädern eine besser geschlossene Laufflächenkontur erzielt, was in einer höheren Laufruhe resultiert.

Grundsätzlich sind zur optimalen Umsetzung eines omnidirektionalen Antriebs mit Mecanum-Rädern 10 zumindest vier Stück erforderlich, die vorteilhafter Weise ein vorderes Rad-Paar 10.1, 10.2 und ein hinteres Rad-Paar 10.3, 10.4 bilden. Dabei sind die geneigten Drehachsen der Hilfsräder 9 der jeweils einander schräg gegenüberliegenden Räder 10.1 und 10.3 bzw. 10.2 und 10.4 gleich ausgerichtet. Vorzugsweise lassen sich alle Räder 10 des Portals 1 einzeln Ansteuern bzw. verfügen über einen eigenen Antrieb 12.

Fig. 4 zeigt beispielhaft einige Verfahrmodi eines Mecanumantriebs 12. Drehen sich alle Mecanum-Räder 10 in eine Laufrichtung der Haupträder, so bewegt sich das Portal 1 in die entsprechende Hauptrichtung (vgl. untere Abbildungen der Fig. 4). Drehen sich die jeweils diagonal gegenüberliegenden Räder 10.1, 10.3 bzw. 10.2, 10.4 in dieselbe Richtung, die einzelnen Diagonalen jedoch gegenläufig zueinander, so kann das Portal 1 aus dem Stand quer zur Laufrichtung der Haupträder 10 verfahren (vgl. obere Abbildungen der Fig.4). Ebenso ist z.B. eine Diagonalbewegung möglich, wenn sich ausschließlich die Räder 10.1, 10.3 oder 10.2, 10.4 auf einer Diagonalen drehen.

Bei dem bevorzugten Ausführungsbeispiel sind an jeder Säule des Portals 1 außenseitig jeweils zwei Mecanum-Räder angeordnet. Genauso gut ist jedoch eine Ausführung mit jeweils vier Mecanum-Rädern pro Säule denkbar.

Um ein abgestelltes Fahrzeug 2 erkennen zu können, weist das Portal 1 gemäß der gezeigten bevorzugten Ausführungsform die Erfassungseinrichtung 7 auf, die unter anderem Sensorik zum Erfassen einer Fahrzeugposition und -ausrichtung enthält. Vorzugsweise ist die Erfassungseinrichtung 7 dazu ausgebildet, eine Kontur einer Fahrzeugoberfläche zu erkennen. Beispiele für geeignete Sensorik sind Kameras, Mikrofone und Strahlungssensoren für Radarwellen. Zusätzlich kann die Erfassungseinrichtung 7 gemäß einer bevorzugten Ausführungsform Laserlinienprojektoren aufweisen und die von diesen erzeugten Lichtfächer bzw. deren Reflektionen mittels mit entsprechenden Filtern ausgestatteten Kameras erfassen. Gemäß einem weiteren bevorzugten Ausführungsbeispiel kann die Erfassungseinrichtung 7 eine oder mehrere Ultraschallsender sowie eine Anzahl entsprechender Mikrophone aufweisen, um aus dem Echo eine approximierte Fahrzeugkontur zu errechnen. Eine weitere alternative Ausführungsform der Erfassungseinrichtung 7 sieht eine Anzahl an Radarwellensendern und -empfängern vor, mit deren Hilfe Fahrzeugposition und -ausrichtung erfasst wird.

Bei dem bevorzugten Ausführungsbeispiel ist die Steuereinrichtung 6 dazu ausgebildet, aus den von der Erfassungseinrichtung 7 erfassten Daten zur Fahrzeugkontur eine Längs- und/oder Mittelachse A des Fahrzeugs 2 zu errechnen, entlang derer das Portal 1 zum Waschen (vorzugsweise mittig und parallel) positioniert und verfahren wird.

Bei dem bevorzugten Ausführungsbeispiel ist die Steuereinrichtung 6 zusätzlich in der Lage anhand der erfassten Fahrzeugkontur ein Höhen- und Breitenprofil des Fahrzeugs 2 zu errechnen und die Waschbürsten 3, 4, 5 sowie die anderen Behandlungseinrichtungen angepasst an diese errechneten Profile optimal zu steuern. Die Erfassung der Höhen- und Breitenprofile des Fahrzeugs 2 kann entweder zu Beginn, bei Erfassung der Position und Ausrichtung des Fahrzeugs 2 geschehen oder auch zu einem späteren Zeitpunkt. Auch eine kontinuierliche Erfassung in Echtzeit ist möglich.

Bei der dargestellten erfindungsgemäßen Portalwaschanlage ist die Erfassungseinrichtung 7 in bzw. an dem Portal 1 angeordnet, sodass dieses autonom in der Lage ist ein Fahrzeug 2 bzw. dessen Position und Ausrichtung zu erkennen. In anderen Worten ist das erfindungsgemäße Portal 1 zur Erfassung des Fahrzeugs 2 nicht auf ortsfeste Einrichtungen angewiesen.

Ebenso ist bei dem bevorzugten Ausführungsbeispiel die Steuereinrichtung 6 integral in dem Portal 1 verbaut. Im dargestellten Ausführungsbeispiel weist die Steuereinrichtung 6 unter anderem eine CPU, Elektromotoren für die einzelnen Mecanum-Räder sowie interne Sensorik 14 zum Erfassen verschiedener Verfahrparameter und zum Berechnen der Position des Portals 1 auf.

Die in Fign. 1 und 2 dargestellte Portalwaschanlage 1 weist einen markierten Bereich 11 zum Abstellen eines zu waschenden Fahrzeugs 2 auf.

Bei einem bevorzugten Wasch- und Behandlungsverfahren für ein Fahrzeug 2 mit einer erfindungsgemäßen Portalwaschanlage stellt der/die Fahrzeugführer-In zunächst das zu waschende Fahrzeug 2 auf der markierten Fläche 11 ab. Das Auswählen eines Waschprogramms sowie eventuell gewünschter Extrafunktionen kann vor oder nach dem Abstellen des Fahrzeugs 2 auf der markierten Fläche 11 erfolgen.

Als nächster Schritt wird zumindest die Position und die Ausrichtung des Fahrzeugs 2 auf der markierten Fläche 11 durch die Erfassungseinrichtung 7 erfasst.

Als Nächstes verfährt das Portal 1 so, dass es fluchtend zur Fahrzeuglängsrichtung dieses mittig in sich aufnimmt.

Während der Fahrzeugwäsche, die alle dem Stand der Technik bekannten Abläufe eines Waschvorgangs in einer Autowaschanlage beinhalten kann, kann sich das Portal 1 so exakt mittig und parallel zur Längsmittelachse relativ dem zu reinigenden Fahrzeug 2 verfahren.

Der/die Fahrzeugführer-In kann sich während des Waschvorgangs entweder im Fahrzeug 2 aufhalten oder das Fahrzeug 2 vor Beginn verlassen.

Die markierte Fläche bzw. vorbestimmte Abstellfläche 11 ist in dem bevorzugten Ausführungsbeispiel mit einem nicht weiter dargestellten entsprechenden Abflusssystemen und einer Wasserwiederaufbereitungsanlagen ausgestattet.

Bei einem weiteren Ausführungsbeispiel der vorliegenden Erfindung kann eine größere vorbestimmte Abstellfläche 11 vorhanden sein, auf welcher mehrere Fahrzeuge 2 abgestellt und sequentiell von dem frei beweglichen Portal 1 gereinigt werden können. Auf diese Weise ließe sich z.B. eine Parkplatzanlage realisieren.

Beim dargestellten Ausführungsbeispiel ist das Portal 1 durch ein System an Versorgungsleitungen an eine nicht weiter dargestellte Basisstation angeschlossen. Diese versorgt das Portal 1 bspw. mit Strom und/oder Druckluft und/oder Wasser und/oder Behandlungsmedien. Ebenso kann das erfindungsgemäße Portal 1 mit einer Batterie und/oder Speicherbehältern für benötigte Medien wie Wasser oder Behandlungsmittel ausgestattet sein, um eine noch größere Autonomie von ortsfesten Anlagen zu erreichen.

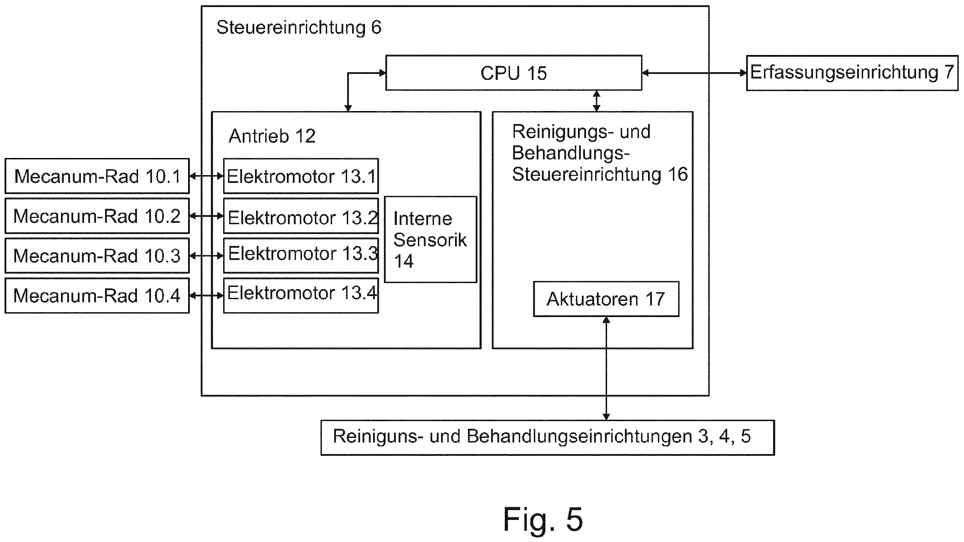

Fig. 5 umreißt noch einmal kurz die Steuerung der erfindungsgemäßen Portalwaschanlage gemäß dem bevorzugten Ausführungsbeispiel. Die Steuereinrichtung 6 umfasst hier eine CPU 15. In die Steuereinrichtung 6 sind zudem ein Antrieb bzw. eine Antriebssteuerung 12 und eine Steuerungseinrichtung 16 für die Reinigungs- und Behandlungseinrichtungen 3, 4, 5 integriert, die jeweils mit der CPU 15 kommunizieren. Die CPU 15 kommuniziert zudem mit der Erfassungseinrichtung und erhält von dieser Information bzgl. der Position und Ausrichtung sowie ggf. der Kontur des Fahrzeugs 2.

Der Antrieb 12 weist unter anderem vier Elektromotoren 13.1, 13.2, 13.3, 13.4, einen für jedes Mecanum-Rad 10.1, 10.2, 10.3, 10.4 sowie eine interne Sensorik 14 zum Erfassen der Bewegungen des Portals 1 auf.

Die Reinigungs- und Behandlungssteuereinrichtung 16 weist diverse Aktuatoren 17, bspw. Elektroantriebe oder Druckpumpen, für die diversen Reinigungs- und Behandlungseinrichtungen 3, 4, 5 auf und steuert diese.

Ausgehend von der ausführlich beschriebenen beispielhaften bevorzugten Ausführungsform sind diverse Abwandlungen möglich.

So muss ein erfindungsgemäßes Portal 1 nicht zwingend Wascheinrichtungen per se aufweisen, vielmehr soll die Erfindung jede Art von in Waschanlagen üblichen Portalanlage zur Fahrzeugbehandlung umfassen.

Ebenso soll die Erfindung nicht auf Portalwaschanlagen für Kraftfahrzeuge beschränkt sein. Vielmehr ist jede vergleichbare Anlage für Nutz- und Lastfahrzeuge miteinbegriffen.

### Bezugszeichen

- 1: Portal;
- 2: Fahrzeug;
- 3, 4, 5: Reinigungseinrichtungen (Waschbürsten);
- 6: Steuerungseinrichtung;
- 7: Erfassungseinrichtung;
- 8: Versorgungsleitungen
- 9: Hilfsrad
- 10: Mecanum (Haupt-)Rad
- 11: markierter Bereich/ vorbestimmte Abstellfläche
- 12: Antrieb
- 13: Elektromotor
- 14: interne Sensorik
- 15: CPU
- 16: Wasch- und Behandlungssteuereinrichtung
- 17: Aktuatoren

## Patentansprüche

1. Portalwaschanlage mit
- einem relativ zu einem Fahrzeug (2) verfahrbaren Portal (1), an welchem Reinigungseinrichtungen (3, 4, 5) zum Reinigen eines Fahrzeugs (2) angeordnet sind,
- einer Steuereinrichtung (6) zum Steuern einer Bewegung des Portals (1) und
- eine Erfassungseinrichtung (7) zum Erfassen einer Position des Fahrzeugs (2),
**dadurch gekennzeichnet, dass**
- das Portal (1) relativ zum Fahrzeug (2) frei verfahr- und ausrichtbar ist;
- die Erfassungseinrichtung (7) ferner eine Ausrichtung des Fahrzeugs (2) erfassen kann; und
- die Steuereinheit dazu ausgebildet ist, das Portal (1) relativ zu der erfassten Position und Ausrichtung des Fahrzeugs (2) vorbestimmt zu positionieren und zu verfahren.

2. Portalwaschanlage gemäß Anspruch 1, **dadurch gekennzeichnet, dass** das Portal (1) zur freien Verfahrbarkeit relativ zum Fahrzeug (2) zumindest zwei, im Wesentlichen horizontale, translatorische Freiheitsgrade und zumindest einen, im Wesentlichen vertikalen, rotatorischen Freiheitsgrad aufweist.

3. Portalwaschanlage gemäß Anspruch 1 oder 2, **dadurch gekennzeichnet, dass** das Portal (1) einen omnidirektionalen Antrieb, insbesondere Mecanum-Rollen (10.1, 10.2, 10.3, 10.4), aufweist, mit deren Hilfe es relativ zum Fahrzeug (2) frei verfahrbar ist.

4. Portalwaschanlage gemäß Anspruch 1 oder 2, **dadurch gekennzeichnet, dass** das Portal (1) flurfrei, insbesondere mittels einer Gelenkarm- oder Portalroboterkinematik frei verfahrbar ist.

5. Portalwaschanlage gemäß einem der vorgenannten Ansprüche, **dadurch gekennzeichnet, dass** die Portalwaschanlage einen markierten Abstellbereich (11) aufweist und die Erfassungseinrichtung (7) dazu ausgebildet ist, den markierten Abstellbereich (11) zu erkennen und/oder das Portal (1) dazu ausgebildet ist, über interne Sensorik (14) seine Position relativ zum markierten Abstellbereich (11) zu erfassen.

6. Portalwaschanlage gemäß einem der vorgenannten Ansprüche **dadurch gekennzeichnet, dass** die Erfassungseinrichtung (7) und/oder die Steuereinrichtung (6) im oder am Portal (1) angeordnet ist.

7. Portalwaschanlage gemäß einem der vorgenannten Ansprüche, **dadurch gekennzeichnet, dass** die Erfassungseinrichtung (7) zumindest
eine optische Erfassungseinrichtung mit zumindest einer Kamera oder einem lichtempfindlichen Sensor und/oder
eine akustische Erfassungseinrichtung, insbesondere eine Ultraschallerfassungseinrichtung mit einem Ultraschallsender und einem entsprechenden Signalempfänger und/oder
zumindest eine Strahlen-Erfassungseinrichtung mit zumindest einem Sender und zumindest einem Empfänger für elektromagnetische Strahlung, insbesondere eine Strahlen-Erfassungseinrichtung für Radarstrahlung, aufweist.

8. Portalwaschanlage gemäß einem der vorgenannten Ansprüche, **dadurch gekennzeichnet, dass** die Erfassungseinrichtung dazu ausgebildet ist, die Kontur zumindest einer Fahrzeugoberfläche zu erfassen und die Steuereinrichtung (6) dazu ausgebildet ist, aus der erfassten Kontur eine Ausrichtung, insbesondere eine Längs- und/oder Quermittelachse (A), des Fahrzeugs (2) zu berechnen.

9. Portalwaschanlage gemäß einem der vorgenannten Ansprüche, **dadurch gekennzeichnet, dass** zusammen mit der Position und Ausrichtung des Fahrzeugs (2) auch ein Höhen und/oder Breitenprofil desselben von der Erfassungseinrichtung (7) erfasst wird.

10. Verfahren zum Reinigen eines Fahrzeugs mittels einer Portalwaschanlage, **gekennzeichnet durch die Schritte**
- Abstellen eines Fahrzeugs (2) auf einer vorbestimmten, insbesondere markierten, Fläche (11);
- Erfassen einer Position und einer Ausrichtung des abgestellten Fahrzeugs (2);
- Ausrichten eines frei beweglichen Portals (1) anhand der erfassten Fahrzeugposition und -ausrichtung und Positionieren des Portals (1) an eine vorbestimmte Position relativ zum Fahrzeug; und
- Reinigen des Fahrzeugs (2) mittels an dem Portal (1) angeordneten Reinigungsvorrichtungen (3, 4, 5).

## Claims

1. A gantry washing system comprising
- a gantry (1) that can be moved relative to a vehicle (2), on which gantry washing devices (3, 4, 5) for washing a vehicle (2) are arranged,
- a control device (6) for controlling a movement of the gantry (1) and
- a detection device (7) for detecting a position of the vehicle (2),
**characterized in that**
- the gantry (1) can be freely moved and oriented relative to the vehicle (2);
- the detection device (7) can further detect an orientation of the vehicle (2); and
- the control unit is designed to position and move the gantry (1) in a predetermined manner relative to the detected position and orientation of the vehicle (2).

2. The gantry washing system according to claim 1, **characterized in that** the gantry (1) for being able to be freely moved relative to the vehicle (2) comprises at least two substantially horizontal degrees of freedom for translation and at least one substantially vertical degree of freedom for rotation.

3. The gantry washing system according to claim 1 or 2, **characterized in that** the gantry (1) has an omnidirectional drive unit, in particular mecanum-type rollers (10.1, 10.2, 10.3, 10.4) by means of which it can be freely moved relative to the vehicle (2).

4. The gantry washing system according to claim 1 or 2, **characterized in that** the gantry (1) can be moved while having no contact to the floor, in particular by means of a kinematic system on the basis of an articulated arm or gantry robot.

5. The gantry washing system according to any of the preceding claims, **characterized in that** the gantry washing system comprises a marked parking area (11) and the detection device (7) is designed to identify the marked parking area (11) and/or the gantry (1) is designed to identify its position relative to the marked parking area (11) via an internal sensor system (14).

6. The gantry washing system according to any of the preceding claims, **characterized in that** the detection device (7) and/or the control device (6) is/are arranged in or on the gantry (1).

7. The gantry washing system according to any of the preceding claims, **characterized in that** the detection device (7) comprises at least
one optical detection device with at least one camera or a light-sensitive sensor and/or
one acoustic detection device, in particular an ultrasound detection device having an ultrasound transmitter and a corresponding signal receiver and/or
at least one radiation detection device having at least one transmitter and at least one receiver for electromagnetic radiation, in particular a radiation detection device for radar radiation.

8. The gantry washing system according to any of the preceding claims, **characterized in that** the detection device is designed to detect the contour of at least a vehicle surface and the control device (6) is designed to calculate an orientation, in particular a longitudinal and/or transverse central axis (A) of the vehicle (2), from the detected contour.

9. The gantry washing system according to any of the preceding claims, **characterized in that** also a height- and/or width profile of the vehicle is detected by the detection device (7) together with the position and orientation of the vehicle (2).

10. A method for washing a vehicle by means of a gantry washing system, **characterized by the steps**
- parking a vehicle (2) on a predetermined, in particular marked area (11);
- detecting a position and an orientation of the parked vehicle (2);
- aligning a freely movable gantry (1) on the basis of the detected vehicle position and orientation and positioning the gantry (1) at a predetermined position relative to the vehicle; and
- washing the vehicle (2) by means of gantry washing devices (3, 4, 5) arranged on the gantry (1).

## Revendications

1. Installation de lavage à portique avec
- un portique (1) déplaçable par rapport à un véhicule (2), au niveau duquel des dispositifs de nettoyage (3, 4, 5) sont agencés pour le nettoyage d'un véhicule (2),
- un dispositif de commande (6) pour la commande d'un mouvement du portique (1) et
- un dispositif de détection (7) pour la détection d'une position du véhicule (2),
**caractérisée en ce que**
- le portique (1) est déplaçable et orientable librement par rapport au véhicule (2) ;
- le dispositif de détection (7) peut de plus détecter une orientation du véhicule (2) ; et
- l'unité de commande est réalisé afin de positionner et de déplacer de manière prédéterminée le portique (1) par rapport à la position et l'orientation détectées du véhicule (2).

2. Installation de lavage à portique selon la revendication 1, **caractérisée en ce que** le portique (1) présente pour la libre mobilité par rapport au véhicule (2) au moins deux degrés de liberté translatoires, sensiblement horizontaux, et au moins un degré de liberté rotatif, sensiblement vertical.

3. Installation de lavage à portique selon la revendication 1 ou 2, **caractérisée en ce que** le portique (1) présente un entraînement omnidirectionnel, en particulier des rouleaux Mecanum (10.1, 10.2, 10.3, 10.4) à l'aide desquels il est librement déplaçable par rapport au véhicule (2).

4. Installation de lavage à portique selon la revendication 1 ou 2, **caractérisée en ce que** le portique (1) est librement déplaçable en hauteur, en particulier au moyen d'une cinématique à bras articulé ou à robot portique.

5. Installation de lavage à portique selon l'une quelconque des revendications précédentes, **caractérisée en ce que** l'installation de lavage à portique présente une zone de dépôt (11) marquée et le dispositif de détection (7) est réalisé afin de reconnaître la zone de dépôt (11) marquée et/ou le portique (1) est réalisé afin de détecter par le biais d'un système de capteur interne (14) sa position par rapport à la zone de dépôt (11) marquée.

6. Installation de lavage à portique selon l'une quelconque des revendications précédentes, **caractérisée en ce que** le dispositif de détection (7) et/ou le dispositif de commande (6) est agencé dans ou au niveau du portique (1).

7. Installation de lavage à portique selon l'une quelconque des revendications précédentes, **caractérisée en ce que** le dispositif de détection (7) présente au moins
un dispositif de détection optique avec au moins une caméra ou un capteur sensible à la lumière et/ou
un dispositif de détection acoustique, en particulier un dispositif de détection à ultrasons avec un émetteur d'ultrasons et un récepteur de signal correspondant et/ou
au moins un dispositif de détection de rayons avec au moins un émetteur et au moins un récepteur pour le rayonnement électromagnétique, en particulier un dispositif de détection de rayons pour le rayonnement radar.

8. Installation de lavage à portique selon l'une quelconque des revendications précédentes, **caractérisée en ce que** le dispositif de détection est réalisé afin de détecter le contour au moins d'une surface de véhicule et le dispositif de commande (6) est réalisé afin de calculer à partir du contour détecté une orientation, en particulier un axe médian longitudinal et/ou transversal (A), du véhicule (2).

9. Installation de lavage à portique selon l'une quelconque des revendications précédentes, **caractérisée en ce que** conjointement avec la position et l'orientation du véhicule (2), un profil de hauteur et/ou de largeur de celui-ci est détecté par le dispositif de détection (7).

10. Procédé de nettoyage d'un véhicule au moyen d'une installation de lavage à portique, **caractérisé par les étapes**
- le dépôt d'un véhicule (2) sur une surface (11) prédéterminée, en particulier marquée ;
- la détection d'une position et d'une orientation du véhicule (2) déposé ;
- l'orientation d'un portique (1) librement mobile au moyen de la position et de l'orientation de véhicule détectées et le positionnement du portique (1) au niveau d'une position prédéterminée par rapport au véhicule ; et
- le nettoyage du véhicule (2) au moyen de dispositifs de nettoyage (3, 4, 5) agencés au niveau du portique (1).
